# EUROPÄISCHE PATENTSCHRIFT

(11) **EP 0 554 658 B1**
(45) Veröffentlichungstag und Bekanntmachung des Hinweises auf die Patenterteilung: **22.11.1995**
(21) Anmeldenummer: 93100109.3
(22) Anmeldetag: 07.01.1993
(51) Int. Cl.: B64D 9/00, F16B 5/02

(54) **Vorrichtung zur Ausrichtung und Befestigung von Paletten in Flugzeugen**
Device for alignment and locking palettes inside an aircraft
Dispositif pour aligner et fixer des palettes dans un avion

(30) Priorität: 05.02.1992 DE 4203168
(43) Veröffentlichungstag der Anmeldung: 11.08.1993
(73) Patentinhaber: Daimler-Benz Aerospace Airbus Gesellschaft mit beschränkter Haftung, 21129 Hamburg (DE)
(72) Erfinder: Eilenstein-Wiegmann, Wilfried, W-2805 Stuhr 2 (DE); Vogg, Günther, W-2800 Bremen (DE)
(74) Vertreter: Hansmann, Dierk, Dipl.-Ing.

(56) Entgegenhaltungen:
- EP-A- 0 325 834
- US-A- 2 339 130
- US-A- 4 000 870
- US-A- 4 341 496

## Beschreibung

Die Erfindung betrifft eine Vorrichtung zur Ausrichtung und Befestigung von Paletten in Flugzeugen, wie Sitzpaletten, Paletten zur Aufnahme von Passagiereinrichtungen oder dergleichen, die im wesentlichen aus einem im Bereich der tragenden Struktur anordbaren Grundelement und einem im Bereich der Palette anordbaren Zusatzelement gebildet und über ein Verbindungselement miteinander koppelbar sind.

Derartige Vorrichtungen werden beispielsweise verwendet, um im Innenraum eines Flugzeuges Einrichtungs- oder Ausstattungsgegenstände mit einer Bodenkonstruktion zu verbinden. In der tragenden Struktur sind zur Aufnahme der Grundelemente in der Regel Führungsschienen bzw. Sitzschienen vorgesehen. Die Grundelemente können durch entsprechende Verschraubungen fest mit der tragenden Struktur verbunden werden. Zur Anordnung der Last im Bereich der tragenden Struktur ist es erforderlich, die mit der Last verbundenen Zusatzelemente exakt zu den Grundelementen auszurichten und anschließend mit Hilfe der Verbindungselemente eine Arretierung bzw. eine Verschraubung durchzuführen. Insbesondere bei der Anordnung von begehbaren Flächen mittels zugeordneter Paletten ist es von besonderer Bedeutung, eine exakte Ausrichtung vorzunehmen, die ein Auftreten von Zwischenräumen zwischen den einzelnen Paletten vermeidet. Dies ist mit den bekannten Befestigungsvorrichtungen nicht in zufriedenstellender Weise möglich.

Aufgabe der vorliegenden Erfindung ist es daher, eine Vorrichtung der einleitend genannten Art derart auszubilden, daß eine genau definierte Ausrichtung und Befestigung mit geringem Arbeitsaufwand durchführbar ist.

Diese Aufgabe wird erfindungsgemäß dadurch gelöst, daß im Bereich von Grundelement oder Zusatzelement ein Konus angeordnet ist, der in einem Gehäuse geführt ist, das eine dem Konus angepaßte konusförmige Innenwand aufweist, daß der Konus innerhalb des Gehäuses sowohl in Richtung einer Längsachse des Verbindungselementes als auch quer zur Längsachse mit einem Abstand anordbar ist und daß nach der Durchführung einer Verspannung des Grundelementes relativ zum Zusatzelement der Konus mit seiner konusförmigen Wandung an der Innenwandung des Gehäuses anliegt, so daß die Längsachse des Verbindungselementes, eine Längsachse des Grundelementes und eine Längsachse des Zusatzelementes im wesentlichen identische räumliche Anordnungen aufweisen und daß sich die Längsachsen im wesentlichen parallel zueinander erstrecken.

Durch die Kombination des Konus und des konusförmigen Gehäuses ist es möglich, das Verbindungselement zunächst in eine Aufnahmeöffnung einzuführen und hierbei Abweichungen der Positionierungen der betreffenden Längsachsen durch eine Relativbewegung zwischen Konus und Gehäuse auszugleichen und dabei die Aufnahmeöffnung zentrisch zur Längsachse des Verbindungselementes zu positionieren. Bei einer Arretierungsbewegung des Verbindungselementes, beispielsweise bei der Durchführung einer Schraubbewegung, greift das Verbindungselement mit einem Außengewinde in ein Innengewinde im Bereich der Aufnahmeöffnung ein. Hierdurch wird eine Relativbewegung von Konus und Gehäuse verursacht, die durch die konusförmigen Auflaufflächen eine Zwangsausrichtung des in die Aufnahmeöffnung eingreifenden Verbindungselementes sowie der das Verbindungselement halternden Palette zur Folge hat. Unabhängig von einer ursprünglichen Anordnung der Palette erhält diese nach einer Verspannung des Zusatzelementes relativ zum Verbindungselement eine exakt definierte Ausrichtung, die das Auftreten von Fugen verhindert.

Zur Verwendung einfacher mechanischer Bauelemente im Bereich der Last wird vorgeschlagen, daß der Konus im Bereich des Grundelementes angeordnet ist.

Eine breite Auflagefläche für die Last wird dadurch bereitgestellt, daß sich der Konus in eine dem Zusatzelement zugewandte Richtung erweitert und fest mit der tragenden Struktur verbindbar ist.

Zur Bereitstellung einer großen Kraftübertragungsfläche zur tragenden Struktur ist es aber auch möglich, daß sich der Konus in eine dem Zusatzelement abgewandte Richtung erweitert und daß das Gehäuse fest mit der tragenden Struktur verbindbar ist.

Bei der Verwendung eines als Schraube ausgebildeten Verbindungselementes werden ungewollte Relativbewegungen dadurch verhindert, daß der Konus und das Gehäuse von einer Verdrehsicherung miteinander verbunden sind.

Eine Befestigung des Grundelementes im Bereich üblicher Halterungselemente, die in der Luftfahrt verwendet werden, ist dadurch möglich, daß das Grundelement mit einer im Bereich der tragenden Struktur angeordneten Halterung verbindbar ist.

Zur Erleichterung einer Einführung des Verbindungselementes in eine dafür vorgesehene Aufnahmeöffnung wird vorgeschlagen, daß das Verbindungselement als eine Schraube ausgebildet ist, die im Bereich ihrer dem Grundelement zugewandte Ausdehnung eine Anschrägung aufweist.

Zur einfachen Fertigung wird vorgeschlagen, daß das Verbindungselement im Bereich seiner dem Grundelement zugewandten Ausdehnung mit einem Endstück versehen ist, das eine eine Einführung in das Grundelement erleichternde Anschrägung aufweist.

Die Ermöglichung des Verbindungselementes wird zusätzlich dadurch erleichtert, daß eine Aufnahmeöffnung zum Einführen des Verbindungselementes mit einer angeschrägten Einlauffläche versehen ist.

Zur Ermöglichung einer einfachen Positionierung des Verbindungselementes in einer Ausgangslage und zur Gewährleistung einer sicheren Verspannung des Zusatzelementes relativ zum Grundelement wird vorgeschlagen, daß das Verbindungselement innerhalb des Zusatzelementes verschieblich geführt ist.

Eine unbeabsichtigte Lösung des Verbindungselementes wird dadurch vermieden, daß zur Fixierung des Verbindungselementes innerhalb des Zusatzelementes eine Sicherungseinrichtung vorgesehen ist.

In der Zeichnung sind Ausführungsbeispiele der Erfindung schematisch dargestellt. Es zeigen:
- Fig. 1: einen Querschnitt durch eine Vorrichtung, bei der der Konus fest mit der tragenden Struktur verbunden ist und sich in eine der Palette zugewandte Richtung erweitert,
- Fig. 2: eine Darstellung eines Beginnes eines Ausrichtungsvorganges bei der Vorrichtung gemäß Figur 1,
- Fig. 3: eine Darstellung der Vorrichtung gemäß Figur 2, bei der durch die Einführung des Verbindungselementes das Gehäuse relativ zum Konus verschoben wurde,
- Fig. 4: einen weiteren Ausrichtungsschritt bei der Vorrichtung gemäß Figur 3, bei dem das Verbindungselement in die Aufnahmeöffnung hineingeschraubt wurde,
- Fig. 5: einen Querschnitt gemäß Schnittlinie V-V in Figur 4,
- Fig. 6: eine Darstellung der Vorrichtung gemäß Figur 4 nach einer Beendigung des Ausrichtungsvorganges,
- Fig. 7: eine Draufsicht auf die Vorrichtung gemäß Figur 6 entsprechend Blickrichtung VII,
- Fig. 8: einen Querschnitt durch eine andere Vorrichtung, bei der sich der Konus in eine dem Zusatzelement zugewandte Richtung verjüngt und das Gehäuse fest mit der tragenden Struktur verbunden ist **und**
- Fig. 9: einen Querschnitt durch die Vorrichtung gemäß Figur 8 nach einer Beendigung eines Ausrichtvorganges.

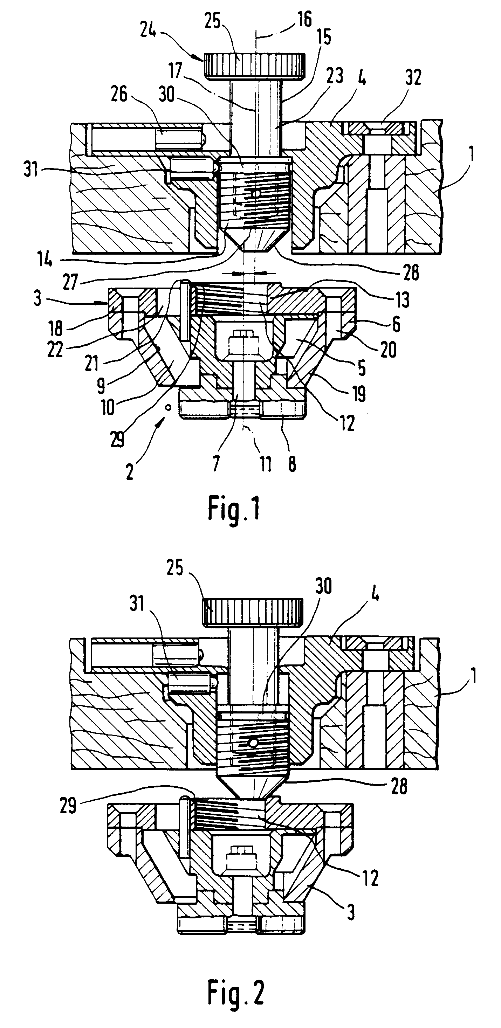

Die Vorrichtung zur Ausrichtung und Befestigung einer Palette (1), besteht im wesentlichen aus einem mit einer tragenden Struktur (2) verbindbaren Grundelement (3) sowie einem mit der Last (1) verbindbaren Zusatzelement (4). Entsprechend der Ausführungsform in Figur 1 ist das Grundelement (3) aus einem Konus (5) und einem Gehäuse (6) ausgebildet. Der Konus (5) ist fest mit der tragenden Struktur (2) verbunden. Die Verbindung kann beispielsweise über eine Verschraubung (7) erfolgen, die den Konus (5) relativ zu einer Halterung (8) verspannt, die als Teil der tragenden Struktur (2) ausgebildet ist. Der Konus (5) erweitert sich in eine dem Zusatzelement zugewandte Richtung. Das Gehäuse (6) weist eine im wesentlichen konusförmige Innenwandung (9) auf, die einen Gehäuseinnenraum (10) begrenzt. Durch die Dimensionierung des Gehäuseinnenraumes (10) ist sichergestellt, daß eine Relativbewegung zwischen dem Gehäuse (6) und dem Konus (5) sowohl in Richtung einer Längsachse (11) des Grundelementes (3) als auch quer zur Längsachse (11) möglich ist.

Im Bereich der dem Zusatzelement (4) zugewandten Ausdehnung weist das Gehäuse (6) eine Aufnahmeöffnung (12) auf, die mit einem Innengewinde (13) versehen ist. Das Innengewinde (13) ist einem Außengewinde (14) eines Verbindungselementes (15) angepaßt, das innerhalb des Zusatzelementes (4) geführt ist. Das Verbindungselement (15) erstreckt sich mit einer Längsachse (16) im wesentlichen mit einer gleichen Orientierung wie eine Längsachse (17) des Zusatzelementes (4).

Zur einfachen Fertigung ist vorgesehen, das Gehäuse (6) aus einer dem Zusatzelement (4) zugewandten Auflageplatte (18) sowie einer konusförmigen Seitenwandung (19) auszubilden, die von Verschraubungen (20) miteinander verbunden sind. Zur Verhinderung einer Verdrehung des Gehäuses (6) relativ zum Konus (5) ist eine Verdrehsicherung (21) vorgesehen, die beispielsweise als ein Stift ausgebildet sein kann, der in eine Aussparung (22) im Bereich des Gehäuses (6) eingreift und im Bereich des Konus (5) fixiert ist.

Das Verbindungselement (15) besteht im wesentlichen aus einem Schaft (23), der mit einem Kopf (24) versehen ist. Zur Sicherung des Verbindungselementes (15) gegen ein unbeabsichtigtes Verdrehen ist der Kopf (24) mit einer Rastung (25) versehen, die von einer Sicherungseinrichtung (26) beaufschlagt wird, die im Bereich des Zusatzelementes (4) angeordnet ist. Die Sicherungseinrichtung (26) kann beispielsweise als eine federnd gelagerte Kugel ausgebildet sein.

Im Bereich seines dem Grundelement (3) zugewandten Endes ist der Schaft (23) von einer Hülse (27) umgeben, die zur Erleichterung einer Einführung in die Aufnahmeöffnung (12) eine Anschrägung (28) aufweist. Statt der Hülse (27) kann der Schaft (23) auch mit einem Endstück versehen werden, das zur Aufnahme des Schaftes (23) ein Sackloch aufweist. Schließlich ist es auch denkbar, den Schaft (23) unmittelbar mit der Anschrägung (28) zu versehen. Zur Erleichterung einer Ausrichtung ist die Aufnahmeöffnung (12) mit einer an die Anschrägung (28) angepaßten Einlauffläche (29) versehen.

Zur Vermeidung einer unbeabsichtigten Relativbewegung zwischen dem Verbindungselement (15) und dem Zusatzelement (4) in einem gelösten Zustand weist das Verbindungselement (15) eine Nut (30) auf, die von einer Arretierungseinrichtung (31) beaufschlagt ist. Die Arretierungseinrichtung (31) kann gleichfalls wie die Sicherungseinrichtung (36) als eine federnd gelagerte Kugel im Bereich des Zusatzelementes (4) ausgebildet sein. Aus einer entsprechenden Arretierungsposition kann das Verbindungselement (15) durch eine Kraftbeaufschlagung in Richtung der Längsachse (16) gelöst werden. Eine Verbindung des Zusatzelementes (4) mit der Last (1) kann mit Hilfe von Verschraubungen (32) erfolgen.

Bei der in Figur 1 dargestellten Positionierung des Grundelementes (3) und des Zusatzelementes (4) erstrecken sich die Längsachse (17) des Zusatzelementes (4) und die Längsachse (11) des Grundelementes (3) mit einem Versatz zueinander. Das Verbindungselement (15) ist bei dieser Ausgangspositionierung durch die Arretierungseinrichtung (31) innerhalb des Zusatzelementes (4) gehaltert.

Bei der Darstellung gemäß Figur 2 ist das Verbindungselement (15) durch eine Kraftbeaufschlagung in Richtung der Längsachse (17) mit seiner Nut (30) aus dem Bereich der Arretierungseinrichtung (31) weggeführt und stößt mit seiner Anschrägung (28) an die Einlauffläche (29) der Aufnahmeöffnung (12).

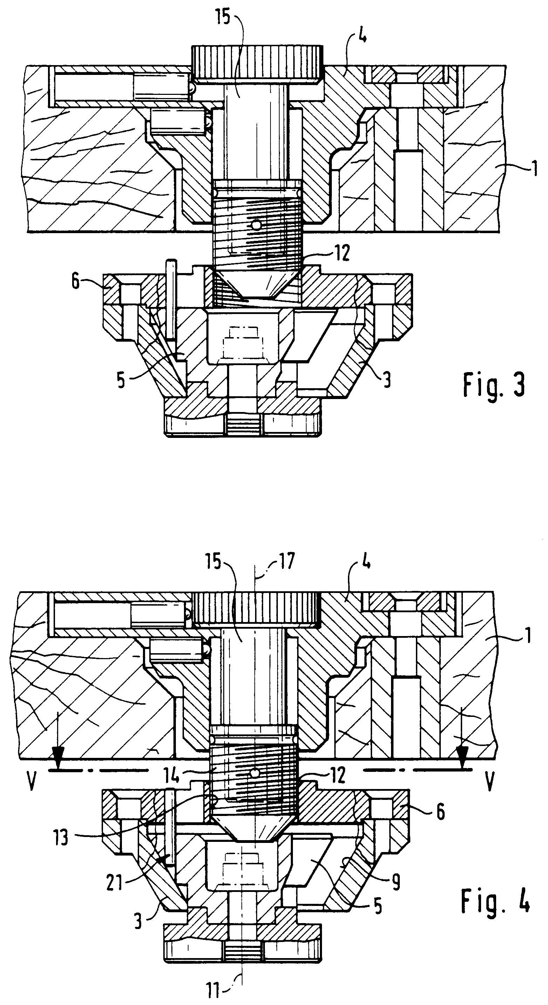

Aus der Darstellung gemäß Figur 3 ist ersichtlich, daß das Verbindungselement (15) gegenüber der Darstellung in Figur 2 weiter in die Aufnahmeöffnung (12) hineingeschoben wurde. Durch die Einführung des Verbindungselementes (15) in die Aufnahmeöffnung (12) wurde das Gehäuse (6) relativ zum Konus (5) verschoben.

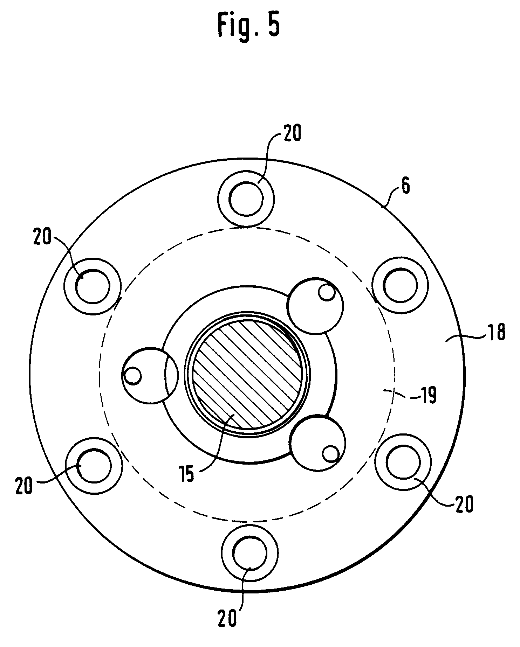

Bei der Darstellung gemaß Figur 4 wurde das Verbindungselement (15) mit seinem Außengewinde (14) in das Innengewinde (13) der Aufnahmeöffnung (12) hineingeschraubt. Ein Mitdrehen des Gehäuses (6) wird durch die Verdrehsicherung (21) verhindert. Durch das Einschrauben des Verbindungselementes (15) in das Gehäuse (6) wird das Gehäuse (6) angehoben und mit seiner Innenwandung (9) entlang des Konus (5) geführt. Hierdurch erfolgt eine Annäherung der Längsachsen (11,17) und damit eine Ausrichtung der Last (1).

Aus der Darstellung in Figur 5 ist ersichtlich, daß die Verschraubungen (20) zur Verbindung der Auflageplatten (18) mit der Seitenwandung (19) im wesentlichen entlang einer Kreisbahn angeordnet sind.

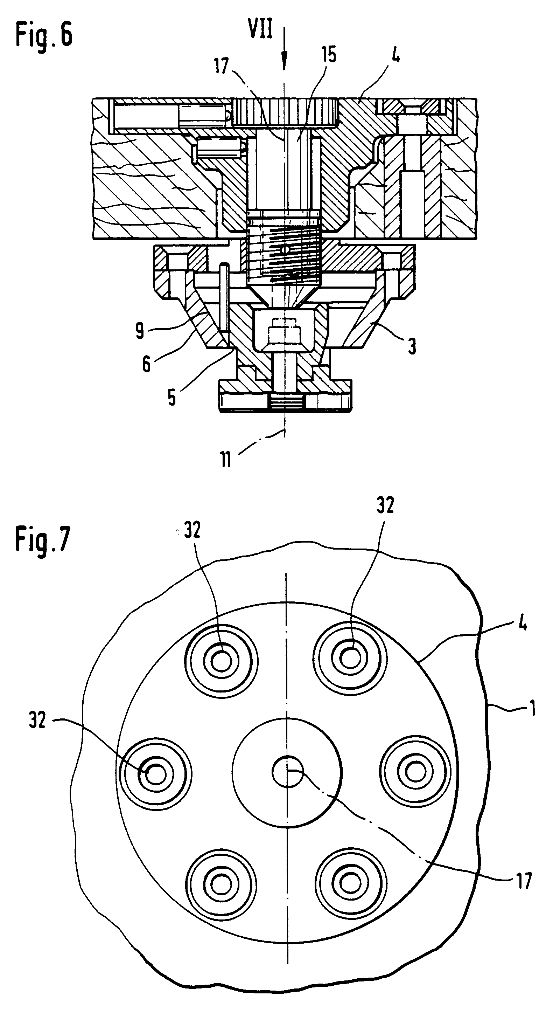

Bei der in Figur 6 dargestellten Endpositionierung ist das Verbindungselement (15) derart angezogen, daß eine Verspannung des Grundelementes (3) relativ zum Zusatzelement (4) erfolgt. In dieser Positionierung liegt der Konus (5) mit seiner konusförmigen Wandung an der Innenwandung (9) des Gehäuses (6) an. Hierdurch erfolgt eine exakte Zentrierung. Die Längsachsen (11,17) fallen in diesem Endzustand im wesentlichen zusammen.

Aus der Darstellung in Figur 7 ist ersichtlich, daß die Verschraubungen (32) zur Verbindung des Zusatzelementes (4) mit der Last (1) im wesentlichen entlang einer Kreisbahn angeordnet sind, die zentrisch zur Längsachse (17) ausgerichtet ist.

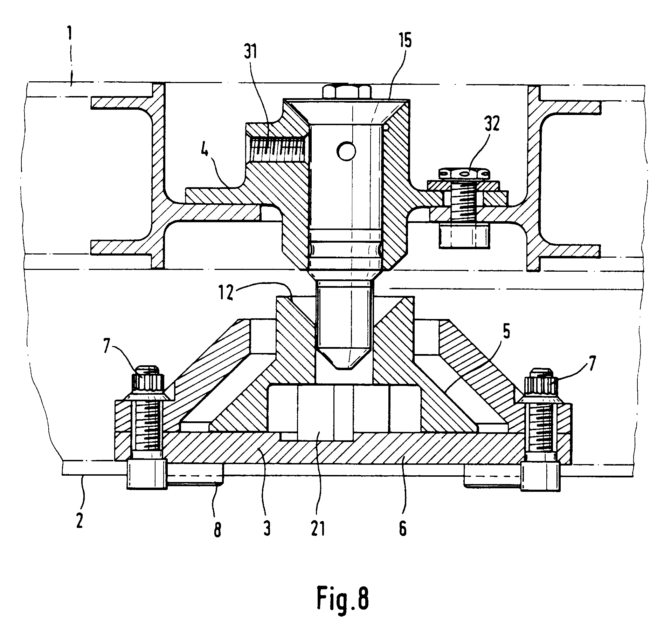

Bei der Ausführungsform gemäß Figur 8 ist das Gehäuse (6) mit der tragenden Struktur (2) über die Verschraubungen (7) verbunden und die Aufnahmeöffnung (12) ist im Bereich des Konus (5) vorgesehen. Der Konus (5) verjüngt sich in eine dem Zusatzelement (4) zugewandte Richtung. Durch diese Ausführungsform kann eine großdimensionierte Kraftübertragungsfläche zur tragenden Struktur (2) bereitgestellt werden.

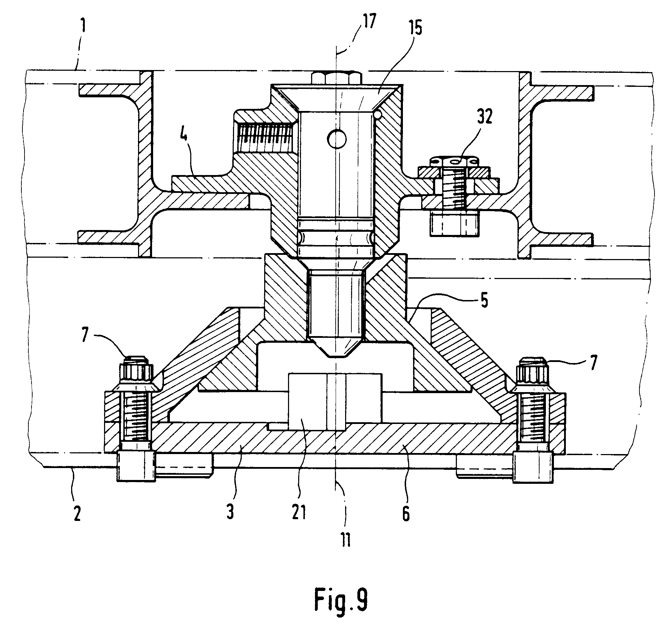

Aus Figur 9 ist ersichtlich, daß auch bei dieser Ausführungsform nach einer Verspannung des Zusatzelementes relativ zum Grundelement (3) durch das Zusammenwirken des Konus (5) und des Gehäuses (6) eine Ausrichtung des Zusatzelementes (4) relativ zum Grundelement (3) derart erfolgt, daß die Längsachsen (11,17) ineinanderfallen. Der Einführ- und Verspannungsvorgang erfolgt im wesentlichen entsprechend den Abläufen bei den Ausführungsformen gemäß Figur 1 bis 7.

## Patentansprüche

1. Vorrichtung zur Ausrichtung und Befestigung von Paletten in Flugzeugen, wie Sitzpaletten, Paletten zur Aufnahme von Passagiereinrichtungen oder dergleichen, die im wesentlichen aus einem im Bereich der tragenden Struktur (2) anordbaren Grundelement (3) und einem im Bereich der Palette (1) anordbaren Zusatzelement (4) gebildet und über ein Verbindungselement (15) miteinander koppelbar sind, dadurch gekennzeichnet, daß im Bereich von Grundelement (3) oder Zusatzelement (4) ein Konus (5) angeordnet ist, der in einem Gehäuse (6) geführt ist, das eine dem Konus (5) angepaßte konusförmige Innenwandung (9) aufweist, daß der Konus (5) innerhalb des Gehäuses (6) sowohl in Richtung einer Längsachse (16) des Verbindungselementes (15) als auch quer zur Längsachse (16) mit einem Abstand zum Gehäuse (6) anordbar ist und daß nach der Durchführung einer Verspannung des Grundelementes (3) relativ zum Zusatzelement (4) der Konus (5) mit seiner konusförmigen Wandung an der Innenwandung des Gehäuses (6) anliegt, so daß die Längsachse (16) des Verbindungselementes (15), eine Längsachse (11) des Grundelementes (3) und eine Längsachse (17) des Zusatzelementes (4) im wesentlichen identische räumliche Anordnungen aufweisen und daß sich die Längsachsen (16,11,17) im wesentlichen parallel zueinander erstrecken.

2. Vorrichtung nach Anspruch 1, dadurch gekennzeichnet, daß der Konus (5) im Bereich des Grundelementes (3) angeordnet ist.

3. Vorrichtung nach Anspruch 1 oder 2, dadurch gekennzeichnet, daß sich der Konus (5) in eine dem Zusatzelement (4) zugewandte Richtung erweitert und fest mit der tragenden Struktur verbindbar ist.

4. Vorrichtung nach 1 oder 2, dadurch gekennzeichnet, daß sich der Konus (5) in eine dem Zusatzelement (4) abgewandte Richtung erweitert und daß das Gehäuse (6) fest mit der tragenden Struktur (2) verbindbar ist.

5. Vorrichtung nach einem der Ansprüche 1 bis 4, dadurch gekennzeichnet, daß der Konus (5) und das Gehäuse (6) von einer Verdrehsicherung (21) miteinander verbunden sind.

6. Vorrichtung nach einem der Ansprüche 1 bis 5, dadurch gekennzeichnet, daß das Grundelement (3) mit einer im Bereich der tragenden Struktur (2) angeordneten Halterung (8) verbindbar ist.

7. Vorrichtung nach einem der Ansprüche 1 bis 6, dadurch gekennzeichnet, daß das Verbindungselement (15) als eine Schraube ausgebildet ist, die im Bereich ihrer dem Grundelement (3) zugewandten Ausdehnung eine Anschrägung (28) aufweist.

8. Vorrichtung nach einem der Ansprüche 1 bis 6, dadurch gekennzeichnet, daß das Verbindungselement (15) im Bereich seiner dem Grundelement (3) zugewandten Ausdehnung mit einem Endstück versehen ist, das eine eine Einführung in das Grundelement (3) erleichternde Anschrägung (28) aufweist.

9. Vorrichtung nach einem der Ansprüche 1 bis 8, dadurch gekennzeichnet, daß eine Aufnahmeöffnung (12) zum Einführen des Verbindungselementes (15) mit einer angeschrägten Einlauffläche (29) versehen ist.

10. Vorrichtung nach einem der Ansprüche 1 bis 9, dadurch gekennzeichnet, daß das Verbindungselement (15) innerhalb des Zusatzelementes (4) verschieblich geführt ist.

11. Vorrichtung nach einem der Ansprüche 1 bis 10, dadurch gekennzeichnet, daß zur Fixierung des Verbindungselementes (15) innerhalb des Zusatzelementes (4) eine Sicherungseinrichtung (26) vorgesehen ist.

## Claims

1. Device for the alignment and fastening in aircraft of pallets, such as seat pallets, pallets for receiving passenger facilities or the like, which are substantially formed by a base element (3) disposable in the region of the supporting structure (2) and by an additional element (4) disposable in the region of the pallet (1) and may be coupled to one another by a connection element (15), characterized in that disposed in the region of the base element (3) or additional element (4) is a cone (5), which is guided in a housing (6) having a conical inner wall (9) adapted to the cone (5), that the cone (5) is disposable inside the housing (6) both in the direction of a longitudinal axis (16) of the connection element (15) and at right angles to the longitudinal axis (16) with a clearance relative to the housing (6) and that, after effecting a bracing of the base element (3) relative to the additional element (4), the cone (5) lies with its conical wall against the inner wall of the housing (6) so that the longitudinal axis (16) of the connection element (15), a longitudinal axis (11) of the base element (3) and a longitudinal axis (17) of the additional element (4) have substantially identical spatial arrangements and that the longitudinal axes (16, 11, 17) extend substantially parallel to one another.

2. Device according to claim 1, characterized in that the cone (5) is disposed in the region of the base element (3).

3. Device according to claim 1 or 2, characterized in that the cone (5) is widened in a direction towards the additional element (4) and is firmly connectable to the supporting structure.

4. Device according to 1 or 2, characterized in that the cone (5) is widened in a direction remote from the additional element (4) and that the housing (6) is firmly connectable to the supporting structure (2).

5. Device according to one of claims 1 to 4, characterized in that the cone (5) and the housing (6) are connected to one another by an anti-rotation element (21).

6. Device according to one of claims 1 to 5, characterized in that the base element (3) is connectable to a holding device (8) disposed in the region of the supporting structure (2).

7. Device according to one of claims 1 to 6, characterized in that the connection element (15) takes the form of a screw, which has a bevel (28) in the region of its extension towards the base element (3).

8. Device according to one of claims 1 to 6, characterized in that the connection element (15) in the region of its extension towards the base element (3) is provided with an end piece, which has a bevel (28) facilitating introduction into the base element (3).

9. Device according to one of claims 1 to 8, characterized in that a location hole (12) for introduction of the connection element (15) is provided with a bevelled run-in surface (29).

10. Device according to one of claims 1 to 9, characterized in that the connection element (15) is guided displaceably inside the additional element (4).

11. Device according to one of claims 1 to 10, characterized in that a retaining device (26) is provided for fixing the connection element (15) inside the additional element (4).

## Revendications

1. Dispositif d'orientation et de fixation de palettes dans les avions, par exemple palettes d'appui ou palettes destinées à la réception des effets des passagers ou autre charge du même genre, lesquelles sont composées principalement d'un élément de base (3) pouvant être disposé dans la zone de la structure portante (2) et d'un élément auxiliaire (4) pouvant être disposé à proximité de la palette (1), de même qu'elles peuvent être accouplées l'une à l'autre au moyen d'un élément de connexion (15), caractérisé en ce que un cône (5) est disposé à proximité de l'élément de base (3) ou de l'élément auxiliaire (4), ledit cône étant introduit dans un logement (6) présentant une paroi interne (9) de forme conique adapté au cône (5), en ce que le cône (5) peut être disposé à l'intérieur du logement (6) à une certaine distance du logement (6) aussi bien dans la direction d'un axe longitudinal (16) de l'élément de connexion (15) que transversalement à l'axe longitudinal (16), et en ce que après avoir opéré un blocage de l'élément de base (3) par rapport à l'élément auxiliaire (4), le cône (5) repose par l'intermédiaire de sa paroi conique sur la paroi interne du cylindre (6), de telle sorte que l'axe longitudinal (16) de l'élément de connexion (15), un axe longitudinal (11) de l'élément de base (3) et un axe longitudinal (17) de l'élément auxiliaire (4) présentent des dispositions dans l'espace principalement identiques et de telle sorte que les axes longitudinaux (16, 11, 17) s'étendent essentiellement parallèlement les uns aux autres.

2. Dispositif selon la revendication 1, caractérisé en ce que le cône (5) est disposé dans la zone de l'élément de base (3).

3. Dispositif selon l'une ou l'autre des revendications 1 et 2, caractérisé en ce que le cône (5) s'élargit dans une direction tournée vers l'élément auxiliaire (4) et peut être fixé sur la structure portante.

4. Dispositif selon l'une ou l'autre es revendications 1 et 2, caractérisé en ce que le cône (5) s'élargit dans une direction opposée à l'élément auxiliaire (4) et en ce que le logement (6) peut être fixé à la structure portante (2).

5. Dispositif selon l'une ou l'autre des revendications 1 à 4, caractérisé en ce que le cône (5) et le logement (6) sont connectés l'un à l'autre par une sécurité (21) destinée à empêcher la rotation.

6. Dispositif selon l'une ou l'autre des revendications 1 à 5, caractérisé en ce que l'élément de base (3) peut être relié avec une fixation (8) disposée à proximité de la structure portante (2).

7. Dispositif selon l'une ou l'autre des revendications 1 à 6, caractérisé en ce que l'élément de connexion (15) est conçu comme une vis présentant une inclinaison (28) dans la zone de son extension tournée vers l'élément de base (3).

8. Dispositif selon l'une ou l'autre des revendications 1 à 6, caractérisé en ce que l'élément de connexion (15) est pourvu d'un élément d'extrémité dans la zone de son extension tournée vers l'élément de base (3), ledit élément d'extrémité présentant une inclinaison (28) facilitant une insertion dans l'élément de base (3).

9. Dispositif selon l'une ou l'autre des revendications 1 à 8, caractérisé en ce que un orifice de réception (12) est pourvu d'une surface d'entrée (29) inclinée afin de permettre l'insertion de l'élément de connexion (29).

10. Dispositif selon l'une ou l'autre des revendications 1 à 9, caractérisé en ce que l'élément de connexion (15) est inséré à l'intérieur de l'élément auxiliaire (4) de manière à pouvoir coulisser.

11. Dispositif selon l'une ou l'autre des revendications 1 à 10, caractérisé en ce que un mécanisme de sécurité (26) est prévu afin de permettre la fixation de l'élément de connexion (15) à l'intérieur de l'élément auxiliaire (4).
